Europäisches Patentamt

(19) European Patent Office

Office européen des brevets

(11) Veröffentlichungsnummer: **0 270 525**
**B1**

(12) **EUROPÄISCHE PATENTSCHRIFT**

(45) Veröffentlichungstag der Patentschrift:
**02.08.89**

(21) Anmeldenummer: **86903226.8**

(22) Anmeldetag: **30.05.86**

(86) Internationale Anmeldenummer:
**PCT/DE 86/00223**

(87) Internationale Veröffentlichungsnummer:
**WO 87/07180 (03.12.87 Gazette 87/27)**

(51) Int. Cl.⁴: **B 01 D 46/24,** B 01 D 29/10,
B 01 D 46/42, G 21 F 9/02

(54) **VORRICHTUNG ZUM FILTERN VON GASEN.**

(43) Veröffentlichungstag der Anmeldung:
**15.06.88 Patentblatt 88/24**

(45) Bekanntmachung des Hinweises auf die Patenterteilung:
**02.08.89 Patentblatt 89/31**

(84) Benannte Vertragsstaaten:
**AT BE CH DE FR GB IT LI LU NL SE**

(56) Entgegenhaltungen:
**FR-A-2 269 177**
**FR-A-2 556 608**

(73) Patentinhaber: **Schumacher GmbH & Co. KG, Zur Flügelau 70, D-7180 Crailsheim (DE)**

(72) Erfinder: **REINHARDT, Erich, Karl, Hindenburgstrasse 88, D-7120 Bietigheim-Bissingen (DE)**
Erfinder: **SCHUBERT, Rainer, Hans, Krackerstrasse 59, D-7180 Crailsheim (DE)**

(74) Vertreter: **Hoeger, Stellrecht & Partner, Uhlandstrasse 14 c, D-7000 Stuttgart 1 (DE)**

## Beschreibung

Die Erfindung betrifft eine Vorrichtung zum Filtern von Gasen mit einem geschlossenen Behälter, der von einer horizontalen Lochplatte in einen unteren, mit einem Gaseinlaß versehen, und einen oberen, mit einem Gasauslaß versehenen Teilraum unterteilt wird, und mit rohr- oder kerzenförmigen Filterelementen, die abgedichtet in Löcher der Lochplatte eingehängt sind und sich mit einer flanschförmigen Verdickung an ihrem oberen Ende an der Lochplatte abstützen.

Vorrichtungen dieser Art werden eingesetzt, um beispielsweise nach einer Kohlevergasung entstandene heiße Gase zu filtern. Das zu filternde Gas strömt dabei unter Überdruck von außen nach innen durch die Filterelemente, wobei in bekannten Vorrichtungen in der Lochplatte eine sehr große Anzahl derartiger Filterelemente parallel zueinander eingehängt sind. Aufgrund von lokalen Druckschwankungen können seitliche Kräfte auf die Filterelemente ausgeübt werden, die dazu führen, daß die Filterelemente in ihrem Tragesitz Verschwenkt werden. Dabei heben die Filterelemente zwangsläufig teilweise von ihrer Stützfläche ab, so daß die Dichtung zwischen Filterelementen und Lochplatte nicht mehr gegeben ist.

Eine Abdichtung könnte nur dadurch gewährleistet werden, daß die Filterelemente bei bekannten Lochplatten mit zusätzlichen Vorrichtungen gegen die Lochplatte gespannt werden. Dies ist jedoch praktisch nur schwer möglich, nachdem im Bereich der Filter Gase sehr hoher Temperatur (z. B. 1000°C) hindurchströmen. Die Anordnung zusätzlicher Spannelemente würde außerdem die Vorrichtung sehr komplizieren, wobei insbesondere zu berücksichtigen ist, daß die Löcher in der Lochplatte normalerweise sehr dicht angeordnet sind, so daß wenig Platz für das Anordnen separater Spannelemente verbleibt.

Schließlich würden derartige Spannelemente verhindern, daß bei einem unerwünscht hohen Druckanstieg die Filterelemente kurzzeitig aus ihrem Dichtsitz abgehoben werden können, so daß sie dann die Funktion eines Sicherheitsventils übernehmen können.

Es ist Aufgabe der Erfindung, eine Vorrichtung der gattungsgemäßen Art derart weiterzubilden, daß auch bei einer Verschwenkung der Filterelemente relativ zur senkrechten Mittelachse der Löcher in der Lochplatte ohne zusätzliche konstruktive Maßnahmen eine einwandfreie Abdichtung der Filterelemente gegenüber der Lochplatte gewährleistet ist.

Diese Aufgabe wird bei einer Vorrichtung der eingangs beschriebenen Art erfindungsgemäß dadurch gelöst, daß die flanschformige Verdickung eine Auflagefläche bildet, die auf der Oberfläche einer Kugel mit Mittelpunkt oberhalb der Auflagefläche und auf der senkrechten Mittelachse des Filterelements liegt, und daß das Loch in der Lochplatte den sich unterhalb der Verdickung anschließenden Filtermantel des Filterelements so im Abstand umgibt, daß das Filterelement über einen bestimmten Winkelbereich um den Kugelmittelpunkt verschwenkbar ist.

Diese kugelkalottenförmige Ausbildung der Auflagefläche ermöglicht eine Verschwenkung des Filterelementes um den Mittelpunkt der Kugeloberfläche, ohne daß dabei der dichtende Kontakt mit der umgebenden Stützfläche des Loches aufgehoben wird. Auch bei einer geringfügigen Verschwenkung des Filterelementes ist somit in jedem Falle eine wirksame Dichtung zwischen Filterelement und Lochplatte sichergestellt.

Es kann dabei vorgesehen sein, daß in dem Loch der Lochplatte eine nach innen vorspringende Ringschulter angeordnet ist, auf der sich die Auflagefläche der Verdickung abstützt.

Günstig ist es, wenn der Mittelpunkt der Kugeloberfläche in der Ebene des oberen Randes des Filterelementes liegt, da auf diese Weise der Mittelpunkt des oberen Randes bei einer Verschwenkung des Filterelementes seine Lage relativ zur Lochplatte nicht verändert.

Es kann vorgesehen sein, daß die Stützfläche der Lochplatte, auf der die Auflagefläche des Filterelements aufliegt, ebenfalls auf der Kugeloberfläche liegt. Man erhält dann eine flächige Anlage zwischen Auflagefläche und Stützfläche, die zu einer besonders wirksamen Abdichtung führen kann.

Bei einem abgewandelten Ausführungsbeispiel ist vorgesehen, daß die Auflagefläche auf einer Stützfläche linienförmig anliegt. Dazu kann die Stützfläche beispielsweise kegelig ausgeführt sein, es ist auch möglich, die Stützfläche in Form einer ringförmigen Schneide auszubilden, an der die Auflagefläche zur Anlage gelangt.

Bei einem bevorzugten Ausführungsbeispiel sind Anschläge zur Begrenzung der Schwenkbewegung des Filterelementes vorgesehen, die vorzugsweise am Boden des Filterelements angeordnet sind.

Beispielsweise können die Anschläge durch ein senkrechtes Begrenzungselement gebildet werden, das im unteren Teilraum ortsfest angeordnet ist und nach oben in einen nach unten offenen Hohlraum an einem darüberhängenden Filterelement mit Spiel eintaucht. Je nach Größe dieses Spieles, sind größere oder kleinere Verschwenkbewegungen des Filterelementes möglich.

Günstig ist es, wenn der Hohlraum durch ein Sackloch im verdickten Boden des Filterelements gebildet ist; günstig ist es dabei, wenn in das Sackloch ein elastischer Stopfen eingesetzt ist, der das Begrenzungselement umgibt.

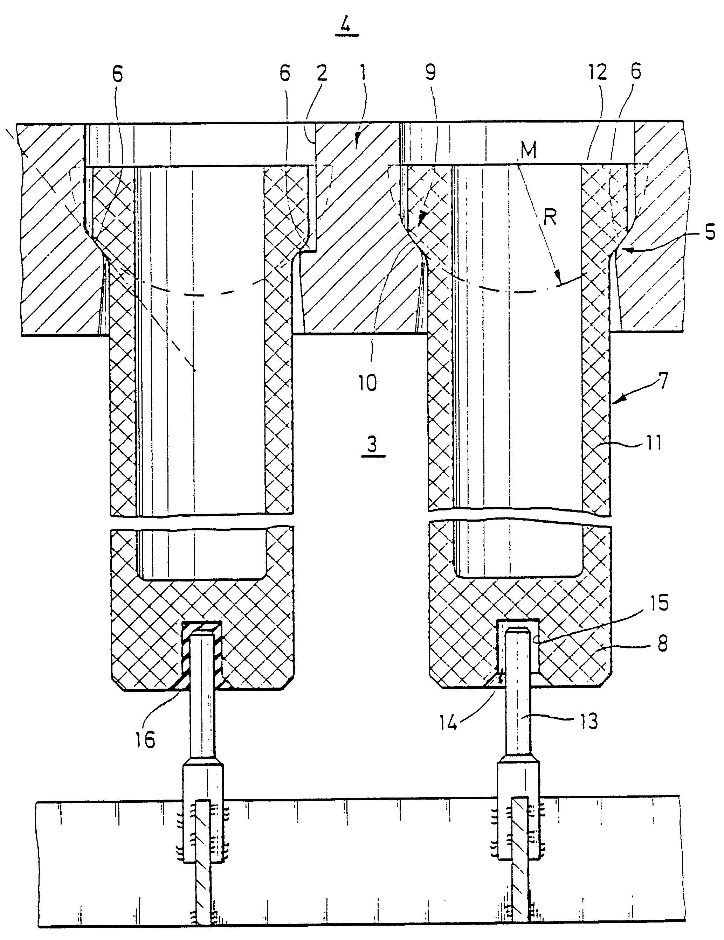

Die nachfolgende Beschreibung einer bevorzugten Ausführungsform der Erfindung dient im Zusammenhang mit der Zeichnung der näheren Erläuterung, Die Zeichnung zeigt eine Teilschnittansicht einer Lochplatte mit eingehängten Filterelementen.

Eine Filtervorrichtung für Gase umfaßt einen abgeschlossenen Behälter, der durch eine horizontale Lochplatte in einen unteren, mit einem

Gaseinlaß versehenen Teilraum und in einen oberen, mit einem Gasauslaß versehenen Teilraum unterteilt wird. In der Zeichnung ist dieser Behälter nicht dargestellt, es wird lediglich ein Ausschnitt aus einer horizontalen Lochplatte 1 gezeigt, in der nebeneinander mehrere durchgehende Löcher 2 angeordnet sind, die den unterhalb der Lochplatte 1 liegenden unteren Teilraum 3 mit dem oberhalb der Lochplatte liegenden oberen Teilraum 4 verbinden. Die Lochplatte 1 kann beispielsweise aus Edelstahl bestehen und erstreckt sich über die gesamte Querschnittsfläche des in der Zeichnung nicht dargestellten Behälters.

In dem dargestellten Ausführungsbeispiel weisen die Löcher 2 eine nach innen vorspringende Ringschulter 5 auf, die an ihrer Oberseite eine Stützfläche 6 für ein in jedes Loch eingehängtes Filterelement 7 ausbildet.

Die Filterelemente sind zylinder- oder kerzenförmig ausgebildet und weisen an ihrem unteren Ende einen verschlossenen Boden 8 und an ihrem oberen, offenen Ende eine radial abstehende Verdickung 9 auf, deren Unterseite eine sich auf der Stützfläche 6 abstützende Auflagefläche 10 bilden. Diese Auflagefläche 10 liegt auf der Oberfläche einer Kugel, deren Mittelpunkt M oberhalb der Auflagefläche auf der senkrechten Mittelachse des Filterelementes liegt, im dargestellten Ausführungsbeispiel in der Ebene des oberen Randes 12 des Filterelements. Die Auflagefläche 10 hat somit die Form einer Kugelkalotte.

In dem in der Zeichnung rechts dargestellten Ausführungsbeispiel hat auch die Stützfläche 6 der Ringschulter 5 die Form einer Kugelkalotte, wobei auch diese auf derselben Kugelfläche liegt, d.h. die Auflagefläche 10 legt sich flächig an die komplementär ausgebildete Stützfläche 6 an.

Das Loch 2 und die Ringschulter 5 umgeben den sich an die Verdickung nach unten anschließenden Filtermantel 11 in geringem Abstand, so daß ein Verschwenken des Filterelementes gegenüber der senkrechten Mittelachse des Loches 2 möglich ist. Bei einem solchen Verschwenken gleitet die kugelkalottenförmige Auflagefläche 10 an der komplementär ausgebildeten Stützfläche 6 entlang, wobei bei jeder möglichen Verschwenkung ein flächiger Kontakt zwischen der Auflagefläche und der Stützfläche erhalten bleibt.

In dem dargestellten Ausführungsbeispiel stützt sich das Filterelement mit seiner Auflagefläche unmittelbar auf der Stützfläche der Ringschulter ab, es könnte hier auch eine Ringdichtung zwischengelegt sein, die vorzugsweise ebenfalls kugelkalottenförmig ausgebildet ist.

Bei dem in der Zeichnung linken Filterelement sind weitere Möglichkeiten für eine Abstützung der kalottenförmigen Auflagefläche auf einer abgewandelten Stützfläche angegeben, beispielsweise kann die Stützfläche kegelig ausgebildet sein (linke Seite des linken Filterelementes) oder die Stützfläche kann schneidenförmig geformt sein (rechte Seite des linken Filterelementes) In beiden Fällen ist durch die kalottenförmige Ausgestaltung der Auflagefläche sichergestellt, daß bei einer Verschwenkung des Filterelementes allseitig ein sicherer und abdichtender Kontakt aufrechterhalten wird.

Im Rahmen der Erfindung wäre auch eine Umkehr möglich, d.h. es könnte auch eine schneidenförmige Auflagefläche am Filterelement mit einer kugelkalottenförmigen Stützfläche in der gleichen Weise zusammenwirken.

Im unteren Teilraum 3 ist unter jedem Filterelement auf der Längsmittelachse des entsprechenden Loches 2 in der Lochplatte 1 ein ortsfestes, senkrecht nach oben gerichtetes, stiftförmiges Begrenzungselement 13 angeordnet, welches in ein Sackloch 14 im verdickten Boden 8 des entsprechenden Filterelementes eintaucht, wobei die Seitenwände 15 des Sackloches 14 das Begrenzungselement 13 im Abstand umgeben. Das Begrenzungselement 13 schlägt an der Seitenwand 15 des Sackloches 14 an, wenn das entsprechende Filterelement über einen vorbestimmten Winkelbetrag hinaus gegenüber der Längsachse des entsprechenden Loches 2 verschwenkt wird, d.h. durch dieses Begrenzungselement 13 wird die Schwenkbewegung jedes Filterelements beschränkt. Dies ist notwendig, um eine gegenseitige Beschädigung benachbarter Filterelemente zu vermeiden.

Um ein hartes Anschlagen des Begrenzungselements 13 an den Seitenwänden 15 des Sackloches 14 zu verhindern, kann in das Sackloch 14 ein elastischer Stopfen 16 eingesetzt werden, der das Begrenzungselement 13 umgibt, wie dies im linken Filterelement der Zeichnung dargestellt ist. Auf diese Weise wird auch ein zusätzliches Rückstellmoment für das Filterelement erzeugt.

Durch die beschriebenen konstruktiven Maßnahmen wird eine sichere Abdichtung der Filterelemente gegenüber der Lochplatte auch dann möglich, wenn die Filterelemente gegenüber der Senkrechten geringfügig verschwenkt werden. Dabei ist es nicht notwendig, zusätzliche Vorrichtungen vorzusehen, insbesondere lassen sich die Filterelemente auch bei Vorsehen der beschriebenen konstruktiven Ausgestaltung ohne weiteres austauschen, ohne daß Spannelemente gelöst werden müssen etc.

## Patentansprüche

1. Vorrichtung zum Filtern von Gasen mit einem geschlossenen Behälter, der von einer horizontalen Lochplatte in einen unteren, mit einem Gaseinlaß versehenen, und einen oberen, mit einem Gasauslaß versehenen Teilraum unterteilt wird, und mit rohr- oder kerzenförmigen Filterelementen, die abgedichtet in Löcher der Lochplatte eingehängt sind und sich mit einer flanschförmigen Verdickung an ihrem oberen Ende an der Lochplatte abstützen,

dadurch gekennzeichnet, daß die flanschförmige Verdickung (9) eine Auflagefläche (10) bildet, die auf der Oberfläche einer Kugel mit Mittelpunkt oberhalb der Auflagefläche (10) und auf der senkrechten Mittelachse des Filterelements (7) liegt, und daß das Loch (2) in der Lochplatte (1) den sich unterhalb der Verdickung (9) anschließenden Filtermantel (11) des Filterelements (7) so im Abstand umgibt, daß das Filterelement (7) über einen bestimmten Winkelbereich um den Kugelmittelpunkt verschwenkbar ist.

2. Vorrichtung nach Anspruch 1, dadurch gekennzeichnet, daß in dem Loch (2) der Lochplatte (1) eine nach innen vorspringende Ringschulter (5) angeordnet ist, auf der sich die Auflagefläche (10) der Verdickung (9) abstützt.

3. Vorrichtung nach Anspruch 1 oder 2, dadurch gekennzeichnet, daß der Mittelpunkt der Kugeloberfäche in der Ebene des oberen Randes (12) des Filterelementes (7) liegt.

4. Vorrichtung nach einem der voranstehenden Ansprüche, dadurch gekennzeichnet, daß die Stützfläche (6) der Lochplatte (1), auf die Auflagefläche (10) des Filterelements (7) aufliegt, ebenfalls auf der Kugeloberfläche liegt.

5. Vorrichtung nach einem der Ansprüche 1 bis 3, dadurch gekennzeichnet, daß die Auflagefäche (10) auf einer Stützfäche (6) linienförmige anliegt.

6. Vorrichtung nach einem der Ansprüche 1 bis 3 oder 5, dadurch gekennzeichnet, daß zwischen Auflagefläche (10) und Lochplatte (1) eine elastische Dichtung mit Paßsitz angeordnet ist.

7. Vorrichtung nach einem der voranstehenden Ansprüche, dadurch gekennzeichnet, daß Anschläge zur Begrenzung der Schwenkbewegung des Filterelements (7) vorgesehen sind.

8. Vorrichtung nach Anspruch 7, dadurch gekennzeichnet, daß die Anschläge am Boden (8) des Filterelements (7) angeordnet sind.

9. Vorrichtung nach Anspruch 8, dadurch gekennzeichnet, daß die Anschläge durch ein senkrechtes Begrenzungselement (13) gebildet werden, das im unteren Teilraum (3) ortsfest angeordnet und nach oben in einen nach unten offenen Hohlraum (Sackloch 14) an einem darüberhängenden Filterelement (7) mit Spiel eintaucht.

10. Vorrichtung nach Anspruch 9, dadurch gekennzeichnet, daß der Hohlraum durch ein Sackloch (14) im verdickten Boden (8) des Filterelements (7) gebildet ist.

11. Vorrichtung nach Anspruch 10, dadurch gekennzeichnet, daß in das Sackloch (14) ein elastischer Stopfen (16) eingesetzt ist, der das Begrenzungselement (13) umgibt.

## Claims

1. Apparatus for filtering gases, having a closed container which is divided by a horizontal apertured plate into a lower sub-chamber provided with a gas inlet and an upper sub-chamber provided with a gas outlet, and having tubular or candle-shaped filter elements which are suspended in sealed manner in apertures of the apertured plate and which are supported against the apertured plate by means of a flange-shaped enlargement at their upper end, characterized in that the flange-shaped enlargement (9) forms a bearing surface (10) which bears on the surface of a sphere having its centre point above the bearing surface (10) and along the perpendicular centre axis of the filter element (7), and in that the aperture (2) in the apertured plate (1) surrounds the filter surface (11) of the filter element (7) attached below the enlargement (9) with clearance, such that the filter element (7) is pivotable about the centre point of the sphere over a predetermined angular range.

2. Apparatus according to Claim 1, characterized in that there is arranged in the aperture (2) of the apertured plate (1) an inwardly projecting annular shoulder (5) against which the bearing surface (10) of the enlargement (9) is supported.

3. Apparatus according to Claim 1 or 2, characterized in that the centre point of the spherical surface lies in the plane of the upper edge (12) of the filter element (7).

4. Apparatus according to one of the preceding claims, characterized in that the support surface (6) of the apertured plate (1), on which bearing surface (10) of the filter element (7) bears, also lies on the spherical surface.

5. Apparatus according to one of claims 1 to 3, characterized in that the bearing surface (10) makes line contact with a support surface (6).

6. Apparatus according to one of Claims 1 to 3 or 5, characterized in that a resilient seal there is arranged in close-fitting manner between the bearing surface (10) and the apertured plate (1).

7. Apparatus according to one of the preceding claims, characterized in that stops are provided for limiting the pivoting movement of the filter element (7).

8. Apparatus according to Claim 7, characterized in that the stops are arranged on the base (8) of the filter element (7).

9. Apparatus according to Claim 8, characterized in that the stops are formed by a perpendicular limiting element (13) which is arranged fixed in the lower sub-chamber (3) and which penetrates upward with play into a hollow space open at the bottom (blind hole 14) in a filter element (7) suspended above it.

10. Apparatus according to Claim 9, characterized in that the hollow space is formed by a blind hole (14) in the enlarged base (8) of the filter element (7).

11. Apparatus according to Claim 10, characterized in that there is inserted in the blind hole (14) a resilient plug (16) which surrounds the limiting element (13).

## Revendications

1. Dispositif pour filtrer des gaz, comprenant un récipient fermé qui est subdivisé par une plaque perforée horizontale en un compartiment inférieur muni d'une entrée de gaz et un compartiment supérieur muni d'une sortie de gaz et des éléments filtrants tubulaires ou en forme de bougie qui sont suspendus à joint étanche dans des trous de la plaque perforée et qui prennent appui sur la plaque perforée par un renflement en forme de collerette prévue à leur extrémité supérieure, caractérisé en ce que le renflement (9) en forme de collerette forme une surface de portée (10) qui repose sur la surface d'une sphère dont le centre se trouve au-dessus de la surface de portée (10) et sur l'axe médian vertical de l'élément filtrant (7), et en ce que le trou (2) de la plaque perforée (1) entoure la robe filtrante (11) de l'élément filtrant (7) qui fait suite au-dessous du renflement (9), avec un écartement tel que l'élément filtrant (7) puisse s'incliner sur un intervalle angulaire déterminé autour du centre de la sphère.

2. Dispositif selon la revendication 1, caractérisé en ce que, dans le trou (2) de la plaque perforée (1), est formé un épaulement annulaire (5) en saillie vers l'intérieur, sur lequel repose la surface de portée (10) du renflement (9).

3. Dispositif selon la revendication 1 ou 2, caractérisé en ce que le centre de la surface de sphère se trouve dans le plan du bord supérieur (12) de l'élément filtrant (7).

4. Dispositif selon une des revendications précédentes, caractérisé en ce que la surface d'appui (6) de la plaque perforée (1), sur laquelle repose la surface de portée (10) de l'élément filtrant (7) se trouve elle aussi sur la surface de sphère.

5. Dispositif selon une des revendications 1 à 3, caractérisé en ce que la surface de portée (10) repose sur une surface d'appui (6) avec contact linéaire.

6. Dispositif selon une des revendications 1 à 3 ou 5, caractérisé en ce qu'une garniture d'étanchéité élastique est agencée avec ajustement sans jeu entre la surface de portée (10) et la plaque perforée (1).

7. Dispositif selon une des revendications précédentes, caractérisé en ce qu'il est prévu des butées pour limiter le mouvement d'inclinaison de l'élément filtrant (7).

8. Dispositif selon la revendication 7, caractérisé en ce que les butées sont prévues au niveau du fond (8) de l'élément filtrant (7).

9. Dispositif selon la revendication 8, caractérisé en ce que les butées sont formées par un élément de limitation verticale (13) qui est disposé en position fixe dans le compartiment inférieur (3) et qui est engagé de bas en haut avec jeu dans une cavité ouverte vers le bas (trou borgne 14) prévue sur un élément filtrant (7) suspendu au-dessus.

10. Dispositif selon la revendication 9, caractérisé en ce que la cavité est formée par un trou borgne (14) ménagé dans le fond épaissi (8) de l'élément filtrant (7).

11. Dispositif selon la revendication 10, caractérisé en ce que, dans le trou borgne (14), est encastré un bouchon élastique (16) qui entoure l'élément de limitation (13).